# EUROPEAN PATENT SPECIFICATION

(11) **EP 0 824 480 B1**
(45) Date of publication and mention of the grant of the patent: **17.01.2001**
(21) Application number: 96912812.3
(22) Date of filing: 17.04.1996
(51) Int. Cl.: B65D 81/26, B29C 45/00, B29C 45/13, B29C 45/14, B65D 45/16

(54) **DESICCANT MATERIAL INCLUDED IN A CLOSED CONTAINER**
GESCHLOSSENER BEHÄLTER MIT TROCKENMITTEL
MATERIAU DESSICATIF INCLUS DANS UN RECIPIENT FERME

(30) Priority: 19.04.1995 US 424996
(43) Date of publication of application: 25.02.1998
(60) Divisional application: 99122375.1
(73) Proprietor: CAPITOL VIAL, INC., Fultonville, NY 12072 (US)
(72) Inventor: HEKAL, Ihab, M., Stanford, CT 06903 (US)
(74) Representative: Abrams, Michael John
(86) International application number: US9605261
(87) International publication number: WO9633108

(56) References cited:
- DE-A- 4 013 799
- US-A- 3 826 358
- US-A- 3 833 406
- US-A- 4 717 324
- US-A- 4 783 056
- US-A- 4 919 984
- DATABASE WPI Section Ch, Week 7721 Derwent Publications Ltd., London, GB; Class A17, AN 77-37259Y XP002065175 & JP 52 047 591 A (YAMANI YAKUHIN KK)

## Description

### TECHNICAL FIELD:

The present invention relates to containers having desiccating abilities. More particularly, the present invention relates to thermoplastic containers.

### BACKGROUND ART:

There are many articles that are preferably stored and/or shipped in an environment that is as moisture free as possible. Therefore, containers having the ability to absorb excess moisture have been recognized as desirable. One application in which moisture absorbing containers are desired is for the shipment and storage of medications whose efficacy is compromised by moisture. The initial placement of medicines into a sealed moisture free container is usually controllable. Furthermore, the container for the medicine is selected so that it has a low permeability to moisture. Therefore, the medication will normally be protected from moisture until it reaches the end user. Once the medicine is received by the consumer, however, the container must be repeatedly opened and closed to access the medication. Each time the container is opened and unsealed, moisture bearing air will most likely be introduced into the container and sealed therein upon closure. Unless this moisture is otherwise removed from the atmosphere or head space of the container, it may be detrimentally absorbed by the medication. For this reason, it is a well known practice to include a desiccating unit together with the medication in the container.

In other instances, moisture may be released from items that have been placed in containers for shipping and/or storage. Prime examples of such items are food stuffs that release moisture during shipping and storage. In the instance of containers that are sealed and substantially impermeable to moisture, the released moisture will remain within the container about the product. It not removed, this released moisture may have ill effects on the very item that released to moisture. It has been found that a substantial amount of moisture is released from certain food products within the first forty-eight (48) hours after manufacture and packaging. This released moisture will remain about the product until removed. If the moisture is not removed shortly after its release, it may cause the food to degrade into a condition that is not saleable. In these cases, desiccants may be included together with the contained items to continually absorb the released moisture until the product is unpacked. In this way, a relatively dry environment is maintained about the stored item.

The need to eliminate moisture from within sealed containers has been previously recognized. Early attempts to achieve these goals included the provision of desiccant materials in fabric or similar bags that are placed in the containers, together and commingled with the matter being shipped or stored. A consumer related problem, however, exists when the desiccant is loose and commingled together with consumable items. If not carefully and thoroughly processed upon unpacking, the desiccant may not be separated from the consumables and could harm a person if unknowingly ingested.

Another known mode by which a desiccant may be provided within a container includes coating the interior surface of the container vessel with a desiccant bearing material. Still further, it is known to provide desiccating abilities in a container through the use of layered structures in which a desiccant is "sandwiched" between moisture permeable material that confines the desiccant. These layered structures often take the form of flexible sheeting that may be formed into bag type containers into which items requiring a reduced moisture environment are placed.

DE-A 40 13 799 discloses a container having a hollow cylindrical insert formed of an injection-molded plastic the interior surface of which is coated with a desiccant, according to the preamble of claim 1. It also discloses a method of manufacturing such a container according to the preamble of claim 16.

Several of the known means by which desiccant bearing containers are constructed require multiple steps and result in more complex and layered structures than are desired. Furthermore, the provision of desiccant capsules together with contained items is not always satisfactory. As previously explained, commingling of desiccant with food items and medications is undesirable from a consumer stand point in that the desiccant may be inadvertently ingested. Still further, if the desiccant is not integrally constructed with the container, or at least attached thereto, it may be prematurely removed while still needed for continued removal of moisture from within the container. Therefore, a need has been recognized for containers that include a desiccant as an integral component of the container's body. Regarding the included desiccant of the container, it is desired to enhance its capabilities of moisture absorption with respect to both rate and quantity. Still further, as in all manufacturing processes, it is desired to reduce the required steps for constructing desiccating containers and simplify the resulting structures.

### DISCLOSURE OF THE INVENTION:

According to the present invention, there is provided a container having desiccating capabilities, said container comprising:
a container body forming at least a partial enclosure so that an inside space and an outside space is created with respect to said container body;
a cap installable upon said container body for closing said container body;
an insert formed from desiccant entrained thermoplastic being fixed relative to said container body; and
at least a portion of said insert being exposed to the inside space of said container body for absorbing moisture therefrom,
wherein said insert is fixed to said container body by a shrink-fit of said container body about said insert.

There is further provided a method according to claim 16 of manufacturing such a container according to claim 1.

The desiccant entrained thermoplastic from which the insert is constructed preferably has a high desiccant concentration of at least forty percent desiccant to thermoplastic by weight. The container body is constructed from substantially desiccant-free thermoplastic in one embodiment and from low desiccant concentrate thermoplastic having at most twenty percent desiccant to thermoplastic by weight in another embodiment. In a preferred embodiment, the container body is constructed from polypropylene. A cap that is sealably engageable with the container body and constructed from polyethylene may optionally be provided. It is contemplated that the insert may be sufficiently encased by the container body so that the insert is only exposed to the inside space of the container and not to the exterior of the container.

It is contemplated that the insert and the container body may be co-molded into a unitary body. As an optional enhancement, the desiccant entrained thermoplastic from which the insert is constructed may include a polar organic compound that enhances the absorption capabilities of the desiccant.

The insert may take the form of a liner that covers at least a majority of the interior surface area of the container body.

The present invention thus provides a container, and discloses a process for constructing the same, the container providing effective desiccating storage and functioning as a shipping container. The containers of the present invention may provide superior desiccating abilities, while at the same time permitting efficient construction of a container that has and maintains structural integrity.

### BRIEF DESCRIPTION OF DRAWINGS

The invention will now be described, by way of example, with reference to the accompanying drawings, in which:

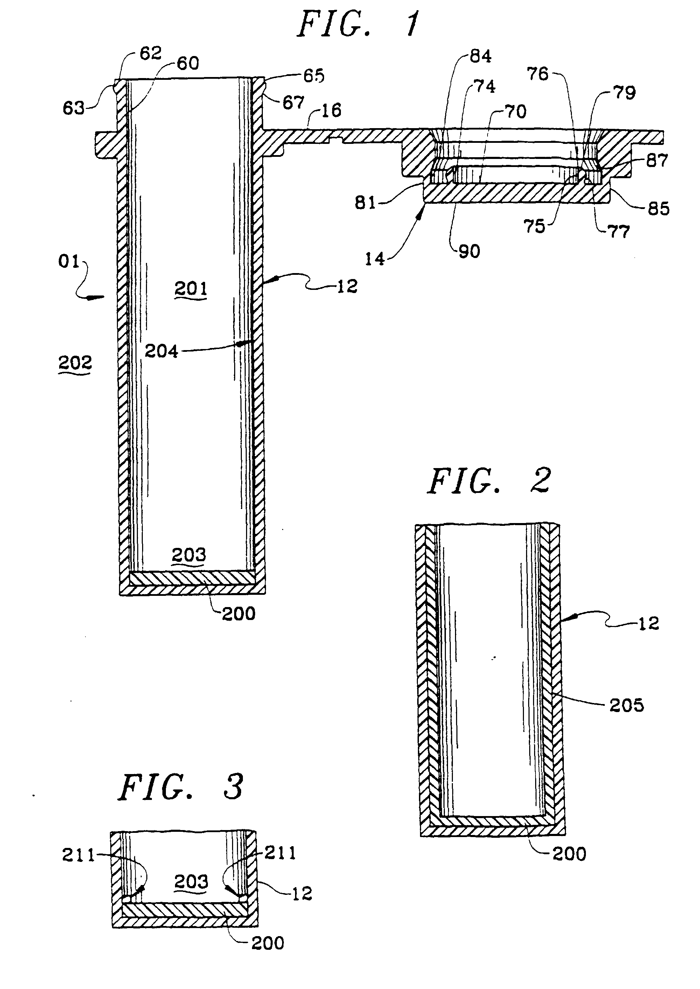

Figure 1 is a cross-sectional view of a desiccating container with an insert in the form of a disk molded therein.

Figure 2 is a cross-sectional view of a desiccating container with an insert in the form of a liner molded therein.

Figure 3 is a partial cross-sectional view of the container body showing a lip retainer.

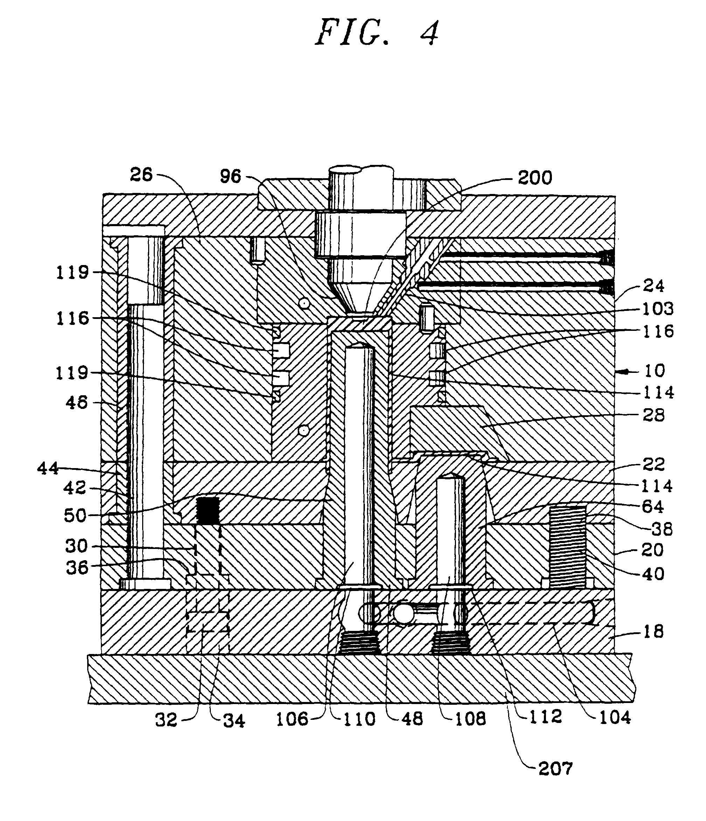

Figure 4 is a side view of a mold in partial section mounted upon a rotatable table for transport between injection stations and showing a container and insert-molded therein.

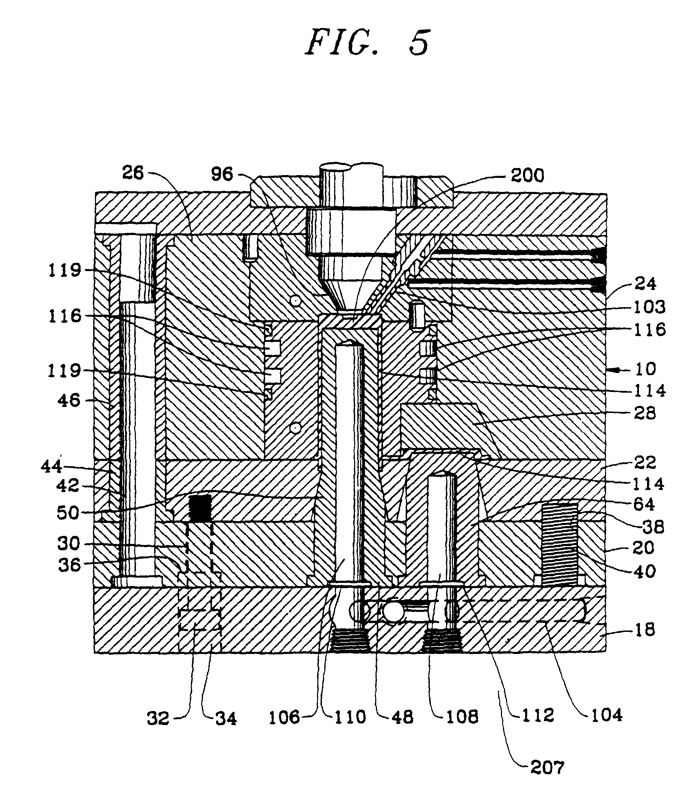

Figure 5 is a side view of a mold in partial section showing a container and insert molded therein in a single station configuration with two injection ports.

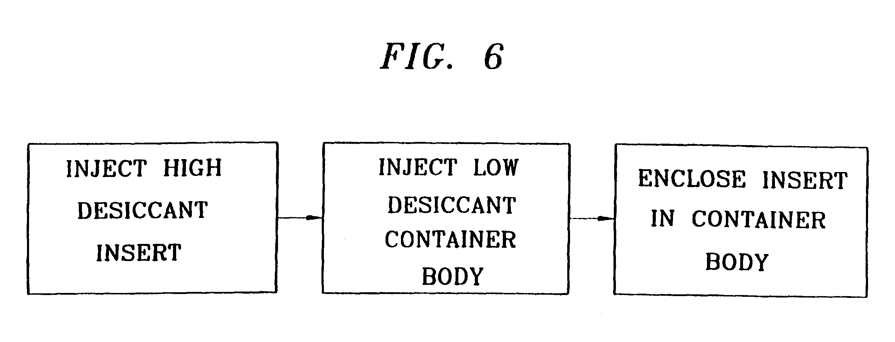

Figure 6 is a schematic of the method by which the container is co-molded.

### MODE(S) FOR CARRYING OUT THE INVENTION :

In one embodiment of the present invention, a relatively small container may be manufactured similar in construction to the aseptic vial and cap of U.S. Patent 4,783,056 of Robert S. Abrams. Therein, the injection molding of capped sample vials from thermoplastic material is disclosed. Like reference numerals are used in the present application to those of U.S. Patent 4,783,056 to designate similar or like apparatus or process.

The presently disclosed invention includes and is applicable to the manufacture of similar containers. The containers 01 disclosed herein, however, are not limited to vials. It is contemplated that containers 01 constructed according to the present invention may be larger or smaller than the vials of U.S. Patent 4,783,056 and of variable shape. Furthermore, the caps 14 may be integrally formed with the bodies 12 of the containers 01, or they may be manufactured as separate units. Still further, the present invention may be embodied exclusively within the body of a container 12 or a cap 14 for a container 01.

The material used in the construction of these containers 01 typically provide a barrier between the interior 201 and exterior 202 of the container 01 that is substantially moisture impermeable and most often is a thermoplastic. While it is contemplated that any thermoplastic may be utilized, polypropylene is preferred for the construction of the body 12 of the container 01. Polypropylene is desirable because of its durability, rigidity and resistance to breakage after being molded into the form of a container 01. Other examples of suitable thermoplastics may be selected from the following groups: polyolefin, polyethylene, polycarbonate, polyamide, ethylene-vinyl acetate copolymer, ethylene-methacrylate copolymer, polyvinyl chloride, polystyrene, polyester, polyester amide, polyacrylic ester, and polyvinylidene chloride, acrylic, polyurethane, polyacetal, and polycarbonate. These and other thermoplastics may be utilized either singularly, or in combinations.

The majority of the container's body 12 is constructed from the base thermoplastic, e.g. polypropylene, because of its durability and resistance to breakage. To establish and/or increase a desiccating capacity of the molded container 01, an insert 200 that has been formed from a desiccant entrained thermoplastic is integrally constructed with the body 12 of the container 01. The concentration of desiccant entrained within the insert 200 may exceed seventy-five percent (75%). Typically, however, the desiccant concentration in the insert 200 will fall within a range of forty to seventy-five per cent (40-75%) desiccant to thermoplastic, by weight. This concentration is considered to be a high concentration for most thermoplastics. The maximum desiccant bearable concentrations will vary among the various types of thermoplastics due to their differing characteristics. In the instance of polypropylene as the base material, an upper concentration of desiccant will be considered to be about sixty percent (60%) by weight. In the instance of polyethylene, the maximum concentration of desiccant will be about seventy-five percent (75%) by weight. As the desiccant concentrations within the thermoplastics increase, the performance of the material eventually degenerates to unacceptable levels.

In one embodiment, the insert 200 is located in the base or bottom 203 of the container body 12 and is exposed to the interior space 201 of the container 01. The configuration of this embodiment is similar to a sample vial. Because the durability and resistance to breakage is lessened in the higher ranges of desiccant content, it is advantageous to have the polypropylene used in the construction of the container's body 12 formed about the insert 200 except for at those surfaces to be exposed to the interior 201 of the container 01. A container 01 of this configuration provides desired structural integrity while also providing the greater desiccating ability of the high desiccant laden insert 200 that is directly exposed to the interior 201 of the container 01. It is also contemplated that the insert 200 may be included in the construction of the container's cap 14. In this case, the insert will be integrally formed with the cap 14 so that an exterior surface of the insert 200 is exposed to the interior 201 of the container 01 when installed thereupon.

As a further alternative embodiment, the insert 200 may be less localized, and extended to a greater degree about a greater portion of the interior surface 204 of the container body 12. In this instance, the high desiccant bearing thermoplastic forms more of a liner 205 at the interior surface 204 of the container 01. To provide maximum desiccating abilities, the liner 205 may completely cover the interior surface 204 of the container 01; this may optionally include the interiorly exposed surfaces of a cap 14 of a closed container 01.

The container 01 includes the provision of a preformed insert 200 about which the thermoplastic of the remainder of the body 12 of the container 01 is injection molded. It is important that the insert 200 be affixed to or within the body 12 of the container 01. This is achieved through a shrink-fit of the insert 200 within the body 12. A particular example of this shrink-fit application would be the provision of a desiccant loaded insert 200 constructed from a base thermoplastic of polyethylene and a container body 12 molded thereabout from a base thermoplastic of polypropylene. Upon cooling after being injection molded, polyethylene shrinks less than polypropylene under similar circumstances. Therefore, if a polypropylene body is injection molded about a polyethylene insert 200 that has been either previously formed, or is injection molded contemporaneously with the container body 12, the polypropylene container body 12 will shrink about the polyethylene insert 200. This shrink-fit method may be implemented whether or not the insert 200 is relatively small and localized with respect to the container body 12 or whether the insert 200 takes the form of a previously described liner 205 configuration. In either case, the exteriorly formed container body 12 may shrink about the insert 200 if the thermoplastics from which the insert 200 and container body 12 are appropriately selected. The shrink-fit method of affixing the insert 200 or liner 205 to the container body 12 is used primarily when the materials of construction of the insert 200 and container body 12 are not compatible. The two components will be considered incompatible if they do not automatically adhere one to the other as a result of the manufacturing process.

It is contemplated that each portion may be injected from separate injection ports 209 and 210 or the same port. As a result, the portions may be injected either sequentially or contemporaneously. In each case, the proportion of the container body 12 formed by each portion will be controlled by the amount of thermoplastic injected into each.

In any event, the thermoplastic in which the desiccant is entrained is moisture permeable to the degree that moisture from the interior 201 of the container 01 may be transferred to and stored in the desiccant. It is possible that the thermoplastic from which the insert 200 is manufactured may have a higher moisture permeability than that from which the remainder of the body 12 of the container 01 is constructed. In this case, the insert 200 may be enclosed within the container 01 by a lower moisture permeable thermoplastic of the container's body 12. In this way, moisture will not readily be transferred from outside the container 01 to the interior. In view of the possibility of desiring differing moisture permeabilities in the insert 200 and the container body 12, it is contemplated that the two components 200, 12 may be constructed from different materials that are potentially incompatible.

It is anticipated that the rate of absorption into the insert 200 may be controlled by the amount of surface area of the insert 200 exposed to the container's 01 interior 201. If greater absorption rates are desired, more surface area of the insert 200 may be exposed. If it is desired that a more prolonged absorption process be achieved, then less surface area will be exposed. It is further contemplated that the rate of absorption by the insert 200 may be controlled by encapsulation of the insert 200. If slower rates of absorption are desired, then the insert 200 can be encased to greater degrees by the thermoplastic that forms the body 12 of the container 01 and which is less permeable to moisture. The rate of absorption may also be controlled by using different types of thermoplastics having different moisture permeability rates. Still further, the rate of moisture absorption by the insert 200 may be affected by other add-mixtures to the thermoplastic. In particular, it has been found that the addition of polar organic compounds, such as "starch", to the desiccant loaded thermoplastic will greatly increase the rate of absorption. The addition of polyvinyl alcohol (PVOH) has similar boosting effects upon the absorption rate of the desiccant loaded thermoplastic. In one particular example, the addition of five percent (5%) starch by weight to polypropylene bearing ten percent (10%) desiccant by weight absorbed moisture at twice the rate of polypropylene bearing twenty percent (20%) desiccant and no starch.

The amount of moisture that can be absorbed by the insert 200 may be controlled in several ways. It is contemplated that the amount of moisture absorbable by the insert 200 may be effected by changing the concentration of desiccant within acceptable ranges; the greater the concentration, the greater the amount of moisture that can be captured.

In an alternative embodiment, the thermoplastic from which the body 12 is constructed may also have desiccant entrained and suspended therein, but in lesser concentrations than the insert 200. It has been found that the concentration of desiccant in the thermoplastic affects the performance characteristics of the molded container 01. As an example, it has been found that while the plastic will carry relatively high percentages of desiccant, desirable characteristics such as durability and resistance to breakage may degrade at higher desiccant concentrations. It has also been found that the plastic may be combined with lower concentrations of desiccant without appreciably degrading the performance of the thermoplastic material in its molded and solid state. In a typical application, a relatively low concentration will fall within the range of five to fifteen percent (5 - 15%) desiccant by weight to thermoplastic, with a preferred concentration being approximately seven and one-half percent (7.5%). Additionally, for the purposes of the disclosure made herein, desiccant-free thermoplastic may also be considered low concentration thermoplastic.

Various concentrations of desiccant bearing thermoplastic are commercially available in pellet form. Custom concentrations may be achieved by dry blending higher concentration desiccant pellets with lower concentration or desiccant-free pellets of thermoplastic. When blended in appropriate proportions, any desiccant concentration less than that of the high concentration desiccant pellets may be accomplished. After the dry blending process, the resulting mixture of pellets may be injection molded in a typical manner.

In a preferred embodiment of the present invention, it is contemplated that the source thermoplastic for the insert 200 and that of the container body 12 may be custom blended to achieve the desired respective desiccant concentrations for each. For the injection molding process, two supply hoppers would be provided; one having the high-desiccant thermoplastic from which the insert is formed and the other having a mixture of pellets of differing concentrations that when melted into solution produce the lower-desiccant thermoplastic from which the body 12 of the container 01 is formed. The insert 200 and container body 12 are then injection molded according to the various methods described herein.

Although certain embodiments of the invention are illustrated and described herein, it will be appreciated that many modifications and variations of the present invention are possible in light of the above teachings and within the purview of the appended claims without departing from the scope of the invention.

## Claims

1. A container (01) having desiccating capabilities, said container (01) comprising:
a container body (12) forming at least a partial enclosure so that an inside space (201) and an outside space (202) is created with respect to said container body (12);
a cap (14) installable upon said container body (12) for closing said container body (12);
an insert (200) formed from desiccant entrained thermoplastic being fixed relative to said container body (12); and
at least a portion of said insert (200) being exposed to the inside space of said container body (12) for absorbing moisture therefrom,
characterised in that said insert (200) is fixed to said container body (12) by a shrink-fit of said container body (12) about said insert (200).

2. A container (01) as claimed in claim 1,
characterised in that said insert (200) is constructed form a material which bonds to the body of the container (01).

3. A container (01) as claimed in claim 1 or 2, further characterised in that said desiccant entrained thermoplastic from which said insert (200) is constructed is of a high desiccant concentration having at least forty percent desiccant to thermoplastic by weight.

4. A container (01) as claimed in claim 1, 2 or 3, characterised in that said container body (12) is constructed from substantially desiccant-free thermoplastic.

5. A container (01) as claimed in claim 1, 2 or 3, characterised in that said container body (12) is constructed from low desiccant concentration thermoplastic having at most twenty percent desiccant to thermoplastic by weight.

6. A container (01) as claimed in any preceding claim, characterised in that said container body (12) is constructed from polypropylene.

7. A container (01) as claimed in any preceding claim, which further comprises a cap (14) sealably engageable with said container body (12).

8. A container (01) as claimed in claim 7,
characterised in that said cap (14) is integral with said container body (12).

9. A container (01) as claimed in claim 7 or 8, characterised in that said cap (14) is constructed from polyethylene.

10. A container (01) as claimed in any preceding claim, characterised in that said insert (200) is sufficiently encased by said container body (12) so that said insert (200) is only exposed to the inside space of the container (01).

11. A container (01) as claimed in any preceding claim, characterised in that said insert (200) and said container body (12) are co-molded into a unitary body.

12. A container (01) as claimed in any preceding claim, characterised in that said desiccant entrained thermoplastic from which said insert (200) is constructed further comprises a polar organic compound that enhances the absorption capabilities of said desiccant.

13. A container (01) as claimed in any preceding claim, characterised in that said insert (200) forms a liner that covers at least a majority of the interior surface area of the container body (12).

14. A container (01) as claimed in claim 13,
characterised in that said liner completely covers the interior surface of the container body (12).

15. A container (01) as claimed in any preceding claim, characterised in that the container (01) is in the form of a vial.

16. A method of manufacturing a container (01) as defined in any preceding claim comprising the following steps:
- injecting a low dessicant concentrate thermoplastic container body (12) about a high dessicant concentrate thermoplastic insert (200),
- cooling or allowing to cool the assembly of said body (12) and insert (200), characterised by the further step wherein the body (12) will shrink about insert (200) and
wherein the materials of construction of the insert (200) and the container body (12) do not automatically adhere one to the other as a result of the manufacturing process.

17. Method of claim 16, wherein the material of construction of the container body (12) is polypropylene and that of the insert (200) is polyethylene.

## Patentansprüche

1. Behälter (01) mit Trocknungseigenschaften, beinhaltend
einen Behälterkörper (12), der mindestens einen teilweisen Einschluss bereitstellt, so dass ein Innenraum (201) und ein Außenraum (202) bezüglich des Behälterkörpers (12) vorhanden sind;
eine Kappe (14), einrichtbar auf dem Behälterkörper (12) für einen Verschluss des Behälterkörpers (12);
einen Einsatz (200), hergestellt aus einem Trockenmittel enthaltenden Thermoplast, der gegenüber dem Behälterkörper (12) fixiert ist; wobei
mindestens ein Teil des Einsatzes (200) zum Innenraum des Behälterkörpers (12) offen ist, so dass daraus die Feuchtigkeit absorbiert wird,
dadurch gekennzeichnet, dass der Einsatz (200) zum Behälterkörper (12) fixiert ist, indem ein Aufschrumpfen des Behälterkörpers (12) um den Einsatz (200) erfolgte.

2. Behälter (01) nach Anspruch 1, dadurch gekennzeichnet, dass der Einsatz (200) aus einem Material hergestellt ist, das an den Körper des Behälters (01) bindet.

3. Behälter (01) nach Anspruch 1 oder 2, dadurch gekennzeichnet, dass zudem der Trockenmittel enthaltende Thermoplast, aus dem der Einsatz (200) gebildet ist, einen hohen Gehalt an Trockenmittel besitzt, wobei auf den Thermoplast mindestens 40 Gew.% Trockenmittel kommen.

4. Behälter (01) nach Anspruch 1, 2 oder 3, dadurch gekennzeichnet, dass der Behälterkörper (12) aus einem im Wesentlichen Trockenmittel-freiem Thermoplast besteht.

5. Behälter (01) nach Anspruch 1, 2 oder 3, dadurch gekennzeichnet, dass der Behälterkörper (12) aus einem Thermoplast mit niederem Trockenmittelgehalt hergestellt ist, welcher höchstens 20 Gew.% Trockenmittel auf Thermoplast enthält.

6. Behälter (01) nach irgendeinem vorhergehenden Anspruch, dadurch gekennzeichnet, dass der Behälterkörper (12) aus Polypropylen hergestellt ist.

7. Behälter (01) nach irgendeinem vorhergehenden Anspruch, beinhaltend zudem eine Kappe (14), die dichtend mit dem Behälterkörper (12) eingreifen kann.

8. Behälter (01) nach Anspruch 7, dadurch gekennzeichnet, dass die Kappe (14) einstückig mit dem Behälterkörper (12) ist.

9. Behälter (01) nach Anspruch 7 oder 8, dadurch gekennzeichnet, dass die Kappe (14) aus Polyethylen hergestellt ist.

10. Behälter (01) nach irgendeinem vorhergehenden Anspruch, dadurch gekennzeichnet, dass der Einsatz (200) hinreichend von dem Behälterkörper (12) eingeschlossen ist, so dass der Einsatz (200) nur zum Innenraum des Behälters (01) offen ist.

11. Behälter (01) nach irgendeinem vorhergehenden Anspruch, dadurch gekennzeichnet, dass der Einsatz (200) und der Behälterkörper (12) zu einem einzelnen Körper zusammengeformt sind.

12. Behälter (01) nach irgendeinem vorhergehenden Anspruch, dadurch gekennzeichnet, dass der Trockenmittel enthaltende Thermoplast, aus dem der Einsatz (200) hergestellt ist, zudem eine polare organische Verbindung aufweist, welche die Absorptionseigenschaften des Trockenmittels erhöht.

13. Behälter (01) nach irgendeinem vorhergehenden Anspruch, dadurch gekennzeichnet, dass der Einsatz (200) eine Auskleidung bildet, welche mindestens einen Großteil der Innenoberfläche des Behälterkörpers (12) bedeckt.

14. Behälter (01) nach Anspruch 13, dadurch gekennzeichnet, dass die Auskleidung vollständig die Innenoberfläche des Behälterkörpers (12) bedeckt.

15. Behälter (01) nach irgendeinem vorhergehenden Anspruch, dadurch gekennzeichnet, dass der Behälter (01) die Form eines Gefäßes besitzt.

16. Verfahren zur Herstellung eines Behälters (01) nach irgendeinem vorhergehenden Anspruch, beinhaltend folgende Schritte:
Schieben eines Behälterkörpers (12) aus einem Thermoplast mit niederem Trockenmittelgehalt um einen Einsatz (200) aus einem Thermoplast mit hohem Trockenmittelgehalt,
Kühlen oder Abkühlen-lassen der Anordnung aus Körper (12) und Einsatz (200), gekennzeichnet durch den weiteren Schritt, dass der Körper (12) um den Einsatz (200) aufschrumpfen wird und wobei die Herstellungsmaterialen für den Einsatz (200) und den Behälterkörper (12) als Folgeergebnis des Herstellungsprozesses nicht automatisch aneinander kleben.

17. Verfahren nach Anspruch 16, wobei das Herstellungsmaterial für den Behälterkörper (12) Polypropylen und das für den Einsatz (200) Polyethylen ist.

## Revendications

1. Récipient (01) ayant des capacités desséchantes, ledit récipient (01) comprenant :
un corps (12) de récipient formant au moins une enceinte partielle de sorte qu'un espace intérieur (201) et un espace extérieur (202) sont créés par rapport audit corps (12) de récipient;
une capsule (14) qui peut être mise en place sur ledit corps (12) de récipient pour fermer ledit corps (12) de récipient;
un insert (200), formé à partir d'un thermoplastique à agent desséchant incorporé, et fixe par rapport audit corps (12) de récipient; et
au moins une partie dudit insert (200) étant exposée à l'espace intérieur dudit corps (12) de récipient pour en absorber l'humidité,
caractérisé en ce que ledit insert (200) est fixé audit corps (12) de récipient par un ajustement par retrait dudit corps (12) de récipient autour dudit insert (200).

2. Récipient (01) selon la revendication 1, caractérisé en ce que ledit insert (200) est fait d'un matériau qui se lie au corps du récipient (01).

3. Récipient (01) selon la revendication 1 ou 2, caractérisé en outre en ce que ledit thermoplastique à agent desséchant incorporé à partir duquel est fabriqué ledit insert (200) présente une forte concentration en agent desséchant, d'au moins quarante pour cent en poids d'agent desséchant par rapport au thermoplastique.

4. Récipient (01) selon l'une quelconque des revendications 1 à 3, caractérisé en ce que ledit corps (12) de récipient est fait d'un thermoplastique substantiellement exempt d'agent desséchant.

5. Récipient (01) selon l'une quelconque des revendications 1 à 3, caractérisé en ce que ledit corps (12) de récipient est fait d'un thermoplastique à faible concentration en agent desséchant ayant au moins vingt pour cent en poids d'agent desséchant par rapport au thermoplastique.

6. Récipient (01) selon l'une quelconque des revendications précédentes, caractérisé en ce que ledit corps (12) de récipient est fait de polypropylène.

7. Récipient (01) selon l'une quelconque des revendications précédentes, qui comprend en outre une capsule (14) pouvant être accrochée de manière étanche audit corps (12) de récipient.

8. Récipient (01) selon la revendication 7, caractérisé en ce que ladite capsule (14) est réalisée d'un seul tenant avec ledit corps (12) de récipient.

9. Récipient (01) selon la revendication 7 ou 8, caractérisé en ce que ladite capsule (14) est en polyéthylène.

10. Récipient (01) selon l'une quelconque des revendications précédentes, caractérisé en ce que ledit insert (200) est suffisamment enveloppé par ledit corps (12) de récipient pour que ledit insert (200) ne soit exposé qu'à l'espace intérieur du récipient (01).

11. Récipient (01) selon l'une quelconque des revendications précédentes, caractérisé en ce que ledit insert (200) et ledit corps (12) de récipient sont co-moulés pour donner un corps unitaire.

12. Récipient (01) selon l'une quelconque des revendications précédentes, caractérisé en ce que ledit thermoplastique à agent desséchant incorporé à partir duquel est fabriqué ledit insert (200) comprend en outre un composé organique polaire qui augmente les capacités d'absorption dudit agent desséchant.

13. Récipient (01) selon l'une quelconque des revendications précédentes, caractérisé en ce que ledit insert (200) forme une garniture qui recouvre au moins une majorité de l'aire de la surface intérieure du corps (12) de récipient.

14. Récipient (01) selon la revendication 13, caractérisé en ce que ladite garniture recouvre complètement la surface intérieure du corps (12) de récipient.

15. Récipient (01) selon l'une quelconque des revendications précédentes, caractérisé en ce que le récipient (01) est sous forme de fiole.

16. Procédé de fabrication d'un récipient (01) tel que défini dans l'une quelconque des revendications précédentes, comprenant les étapes suivantes :
- injecter un corps (12) de récipient en thermoplastique à faible concentration en agent desséchant autour d'un insert (200) thermoplastique à haute concentration en agent desséchant,
- faire refroidir ou laisser refroidir l'ensemble formé par ledit corps (12) et ledit insert (200), caractérisé par l'étape supplémentaire dans laquelle le corps (12) va se rétracter autour de l'insert (200) et dans lequel les matériaux de fabrication de l'insert (200) et du corps (12) de récipient n'adhèrent pas automatiquement l'un à l'autre en conséquence du processus de fabrication.

17. Procédé selon la revendication 16, dans lequel le matériau de fabrication du corps (12) de récipient est du polypropylène et celui de l'insert (200) est du polyéthylène.
